Europäisches Patentamt

(19) European Patent Office

Office européen des brevets

(11) Publication number: **0 088 839**
**A1**

## (12) EUROPEAN PATENT APPLICATION

(21) Application number: **82301276.0**

(22) Date of filing: **12.03.82**

(51) Int. Cl.³: **G 06 F 3/04**

(43) Date of publication of application:
**21.09.83 Bulletin 83/38**

(84) Designated Contracting States:
**DE FR GB IT SE**

(71) Applicant: **Honeywell Information Systems Inc.**
**200 Smith Street**
**Waltham Massachusetts 02154(US)**

(72) Inventor: **Twibell, Jerome J.**
**3528 W.Augusta Ave**
**Phoenix Arizona(US)**

(74) Representative: **Harman, Michael Godfrey et al,**
**Honeywell Control Systems Ltd. Patent Department**
**Charles Square**
**Bracknell Berks RG12 1EB(GB)**

(54) **Input/output multiplexer.**

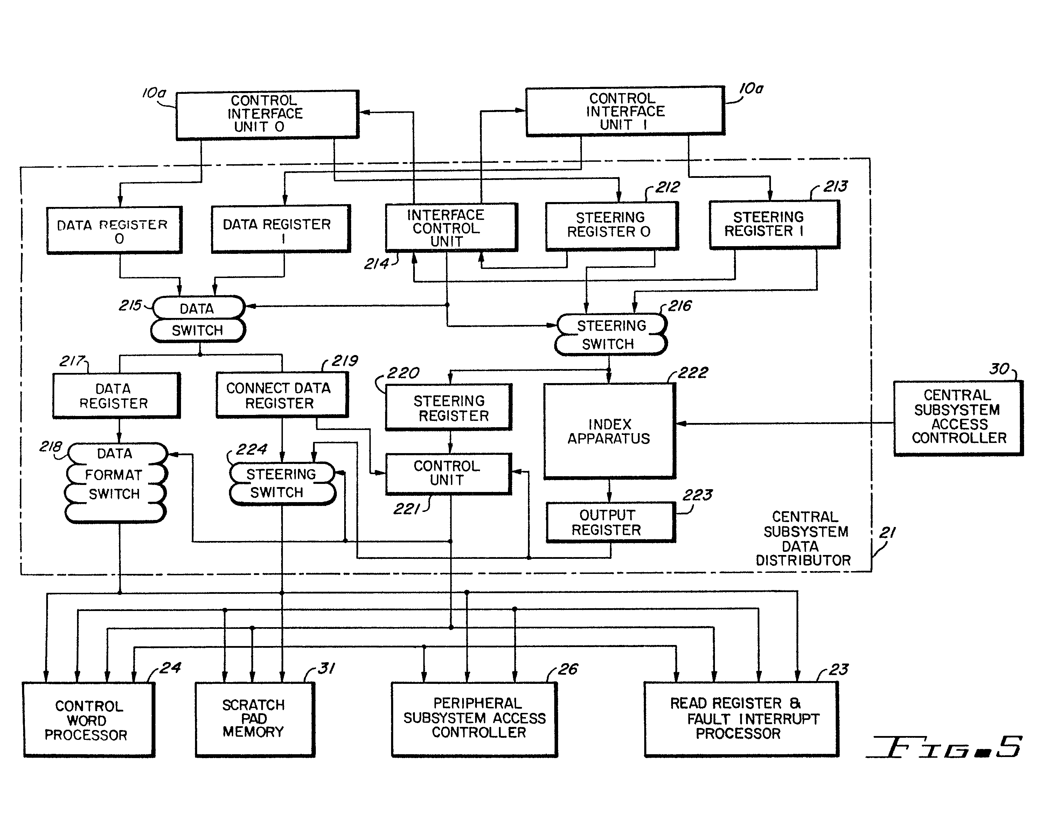

(57) An input/output multiplexer, Figure 5, couples one or more central subsystems with a plurality of peripheral subsystems. Information from the central subsystems passes through corresponding control interfaces 10a to data registers 0 and 1 and steering registers 212, 213. Index number signals from the selected steering register 212, 213 pass to an index apparatus 222 which replaces the index number with a preselected peripheral subsystem identification number. Data signals from data register 0 or 1 pass via a further data register 217 to a formatting switch 218, which converts their format from a central subsystem format to a peripheral subsystem format. Control signals from the selected steering register 212, 213 pass via a further steering register 220 to a control unit 221, which controls the formatting switch 218 to select the particular format conversion.

./...

EP 0 088 839 A1

Fig. 5

## INPUT/OUTPUT MULTIPLEXER

This invention relates generally to data processing systems and more particularly to input/output multiplexers coupling the central subsystem with peripheral subsystems. The multiplexer provides the means for transferring signal groups between the central subsystem and an identified peripheral subsystem.

It is known to provide an input/output multiplexer coupling a central subsystem and peripheral subsystems in which, in response to the initiation of a predetermined operation involving the transfer of signals between the two subsystems, further use of the multiplexer is pre-empted until completion of the predetermined operation. Because an operation can typically involve the exchange of a multiplicity of signal groups, and can typically involve a peripheral device with significantly slower operating characteristics as compared to the central subsystem, the performance of the entire data processing system can be impaired.

In order to maintain an efficient flow of information between the two subsystems, various techniques have been devised to improve the system performance. For example, priority assignments can be instituted in the central subsystem so that operations essential for the efficient operation of the central processing unit of the central subsystem are performed prior to the less essential operations. Similarly, look-ahead techniques can be implemented so that operations can be performed, such as data signal group transfers, prior to the requirement by the central subsystem, thereby permitting a non-essential operation to be performed during a period of relative inactivity.

While these techniques and others have been implemented, the ever-increasing speed of the central processing unit has led  to a requirement of increasing efficiency of operations involving the central subsystem and peripheral subsystems.

It is therefore an object of the present invention to provide an improved multiplexer for coupling the central subsystem and the peripheral subsystem of a data processing system.

Accordingly the present invention provides an input/output multiplexer for coupling one or more central subsystems to a plurality of peripheral subsystems, including an input unit to which control and data signals are fed from the central subsystem or subsystems, characterized in that the input unit comprises: an index unit for replacing an index number portion of the signals from the central subsystem or subsystems by a preselected peripheral subsystem identification number; formatting means for converting data signals from the central subsystem or subsystems from a central subsystem format to a peripheral subsystem format; and control means responsive to the control signals from the central subsystem or subsystems to select the format conversion performed by the formatting means.

A data processing system embodying the present invention will now be described, by way of example, with reference to the drawings, in which:

Figure 1 is a schematic block diagram of a typical data processing system.

Figure 2 is a schematic block diagram of the input/output multiplexer.

Figure 3 is a flow diagram of the operation for transferring data from a predetermined peripheral subsystem to the central subsystem.

Figure 4 is a schematic diagram of files stored in the central subsystem that are required for the data transfer operation.

Figure 5 is a schematic diagram of the central subsystem data distributor.

Figure 6 is a flow diagram of a typical operation in the central subsystem data distributor.

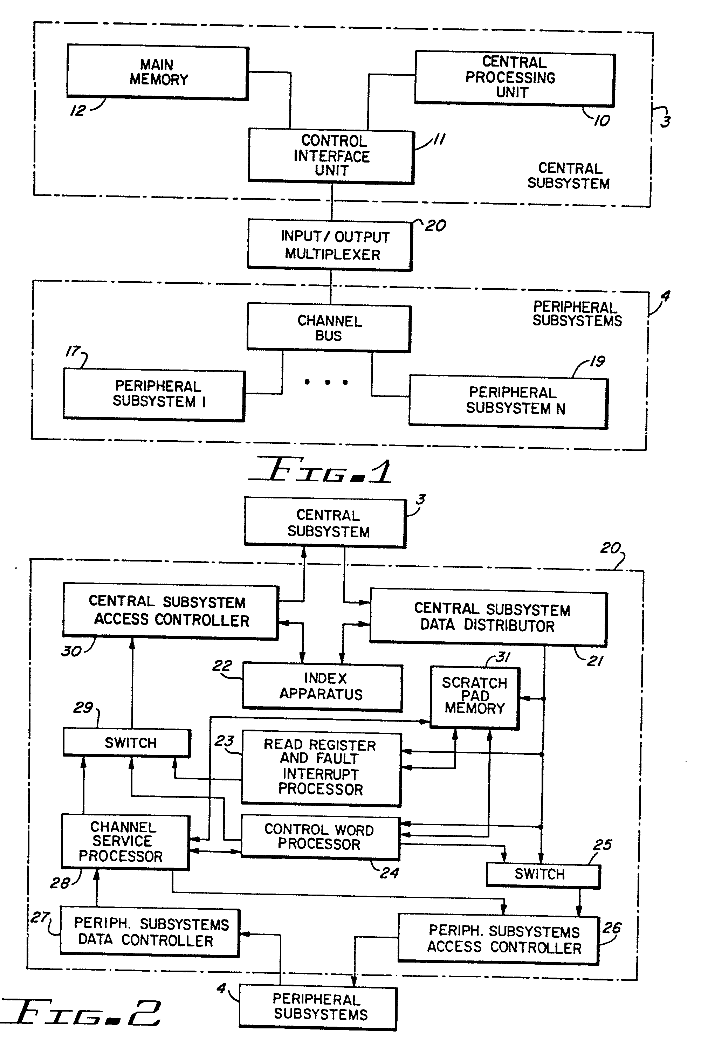

Figure 1 shows the components of a typical data processing system. The central subsystem 3 includes a central processing unit 10 in which signal manipulation is typically performed, a main memory 12 in which the signals required by the central processing unit are stored, and a control interface unit 11 for controlling the transfer of signals to the central processing unit and for controlling the exchange of signals between the central subsystem and the remainder of the data processing system.

The peripheral subsystems 4 comprise at least one peripheral subsystem and a channel bus for providing control apparatus for the peripheral subsystem(s). From the perspective of the central subsystem, a particular peripheral subsystem is identified by its location on a channel bus. This identification can be referred to as a peripheral subsystem number. In addition, provision can be made to expand the number of peripheral subsystems by coupling more channel buses in parallel with the original channel bus. In that case, a particular peripheral sybsystem can be identified by a channel bus number and a peripheral subsystem number. Insofar as the input/output multiplexer is concerned, the combined channel bus and peripheral subsystem numbers are utilized as address identifiers and are associated with a single peripheral subsystem.

The input/output multiplexer 20 couples the peripheral subsystems and the central subsystem. In addition to the possibility of coupling to a plurality of channel buses, the input/output multiplexer can be adapted to couple to a plurality of central subsystems, not shown, through the use of a plurality of control interface units.

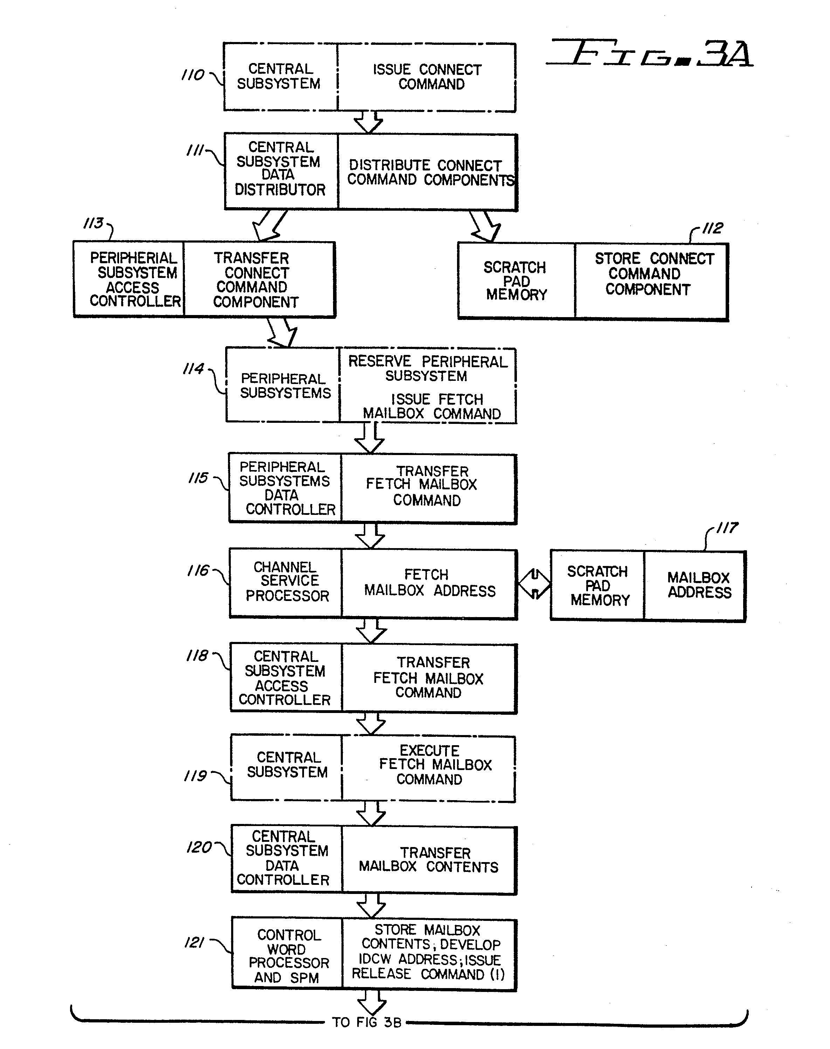

Figure 2 shows the components of an input/output multiplexer 20. The central subsystem data distributor 21 is coupled to the central subsystem 3 and is the mechanism for the receipt of signals from the central subsystem. The central subsystem data distributor 21 is coupled to index apparatus 22, read register and fault processor 23, control word processor 24, switch 25 and scratch pad memory 31. Switch 25 is coupled to the peripheral subsystem access controller 26, read register and fault interrupt processor 23, and control word processor 24. The peripheral subsystem access controller 26 applies input/output multiplexer signal groups to the peripheral subsystem 4. The peripheral subsystem 4 applies signal groups to the peripheral subsystem data controller 27. The channel service processor 28 is coupled to peripheral subsystem data controller 27, control word processor 24, scratch pad memory 31, and switch 29. Switch 29 is coupled to control word processor 24, read register and fault interrupt processor 23 and central subsystem access controller 30. The central subsystem access controller 30 is coupled to index apparatus 22 and applies input/output multiplexer signal groups to central subsystem 3.

The interaction between the central subsystem and the peripheral subsystem is accomplished by a series of commands. Each of the commands can flow through the input/output multiplexer in a manner which does not interfere with other commands in the multiplexer. Thus a set of central subsystems input/output multiplexer interactions can be in independent execution. It is necessary for certain circuits to prevent the simultaneous execution of commands by a multiplexer component; therefore interface control circuits are provided for selected components to ensure there is no detrimental overlap of operation. The interface control circuits can also contain priority networks to ensure that the most essential commands are executed as quickly as possible. However, during an operation, the associated peripheral subsystem is reserved to the use of that operation.

The operation of the input/output multiplexer will first be summarized. The main data and control signal path from the central subsystem 3 to the peripheral subsystems 4 is through the central subsystem data distributor 21 and through the peripheral subsystems access controller 26. The main data and control signal path from the peripheral subsystems 4 to the central subsystem is through the peripheral subsystem data controller 27, the channel service processor 28, and the central subsystem access controller 30.

In the present system, the scratch pad memory 31 is available to store signals necessary for interaction between the central subsystem and the peripheral subsystems. These signal groups are available to the channel service processor, control word processor and the read register and fault interrupt processor. In the present system, duplicate files from the central subsystem are transferred to the scratch pad memory. A control word processor 24 with arithmetic capability is provided for address development.in the input/ output multiplexer rather than in the central subsystem. The developed addresses are utilized to address the appropriate locations in either the central subsystem or in the peripheral subsystems. The data developed by the control word processor is stored in the scratch pad memory for delivery to the channel service processor or to the peripheral subsystems access controller. In addition, the manipulative capacity of the control word processor can be utilized to provide commands directly to the central subsystem via the central subsystem access controller, rather than through the channel service processor.

The read register and fault interrupt processor 23 receives signals from the central subsystem data distributor and delivers signals to the central subsystem access controller or to the peripheral subsystems access controller. The register and fault processor 23 provide certain maintenance and decision making capability that is not utilized in normal operation executions, i.e., for the data transfer type operations described previously.

The channel service processor has decision making capabilities, such as determining when signal groups should be retrieved from the scratch pad memory. In addition, for large blocks of data transfer, the channel service processor determines when the correct amount of data has been transferred.

As will be clear, with a multiplicity of operations in concurrent execution, the possibility of overlapping demands on the central subsystem access controller and on the peripheral subsystem access controller is present. Thus, switch 25 and switch 29 have been added to the input/output multiplexer to ensure that the integrity of signal groups is maintained, and demands on the switch component are prioritized to resolve conflicting requirements.

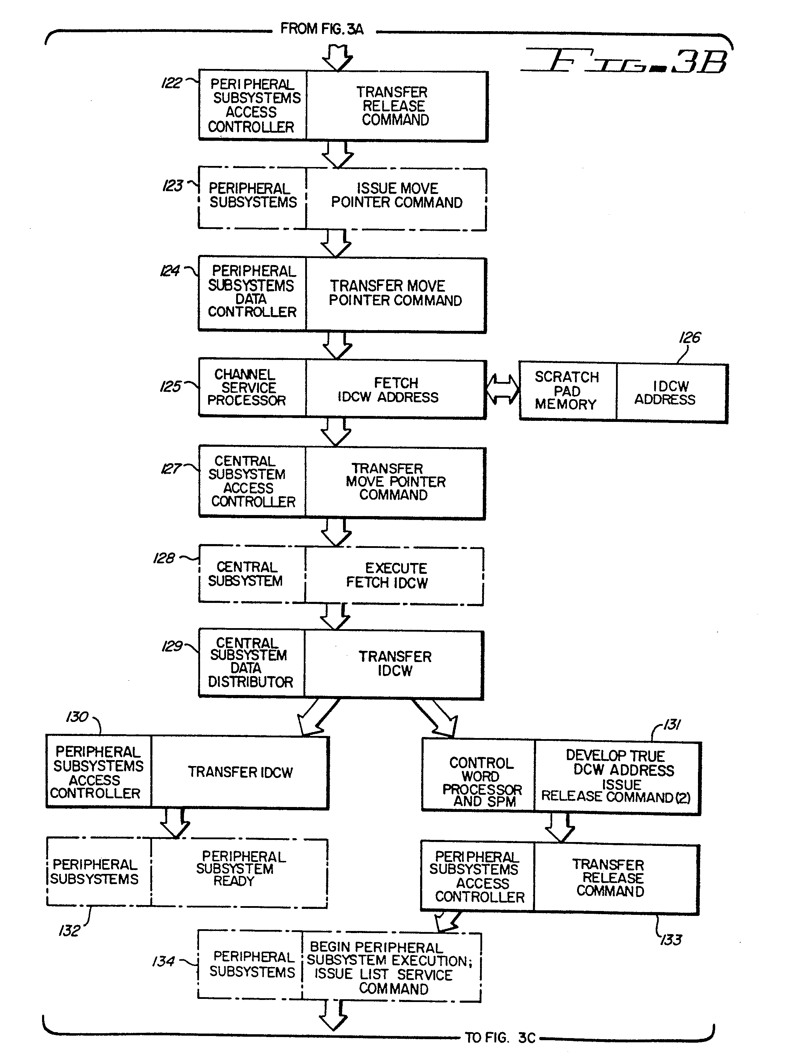

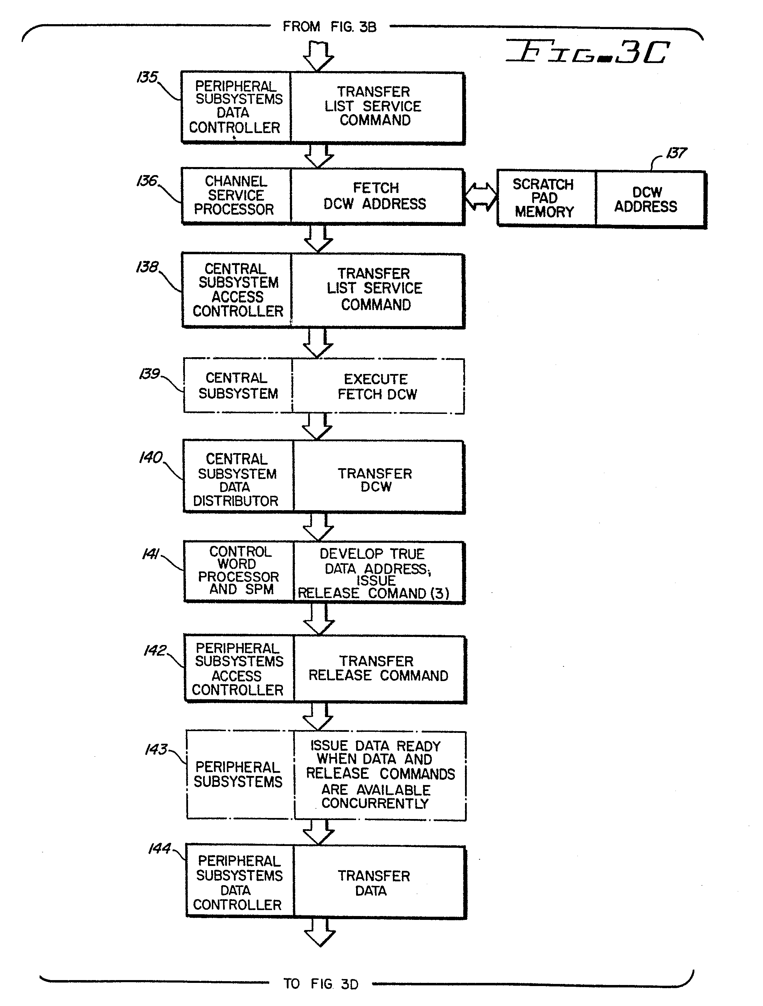

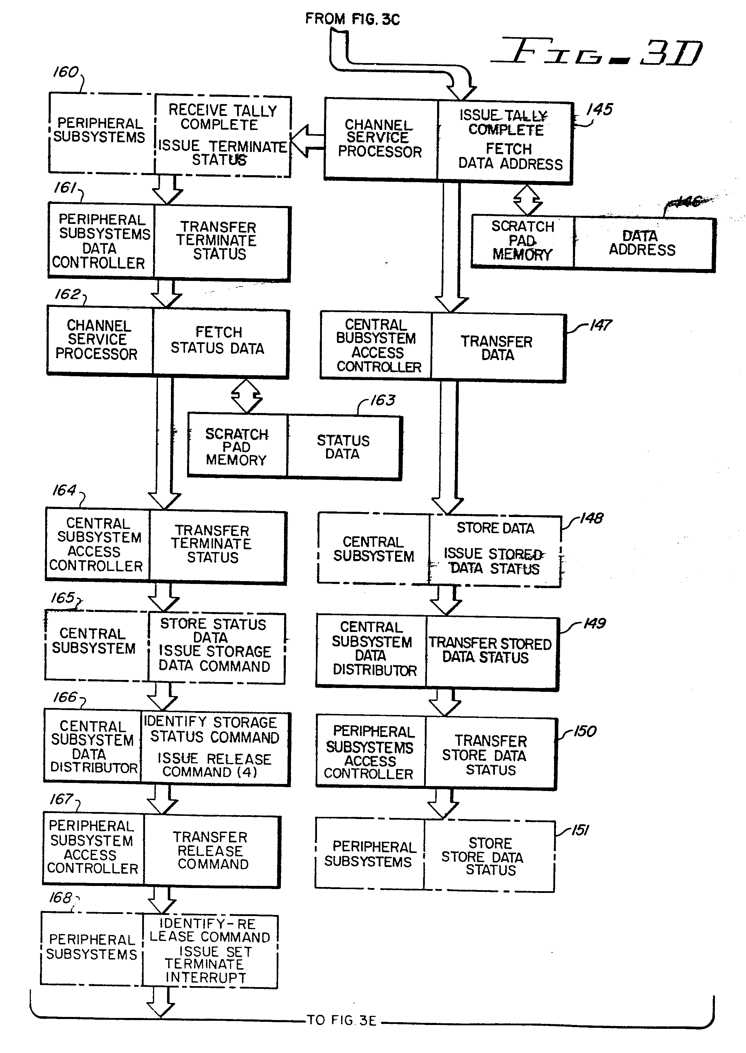

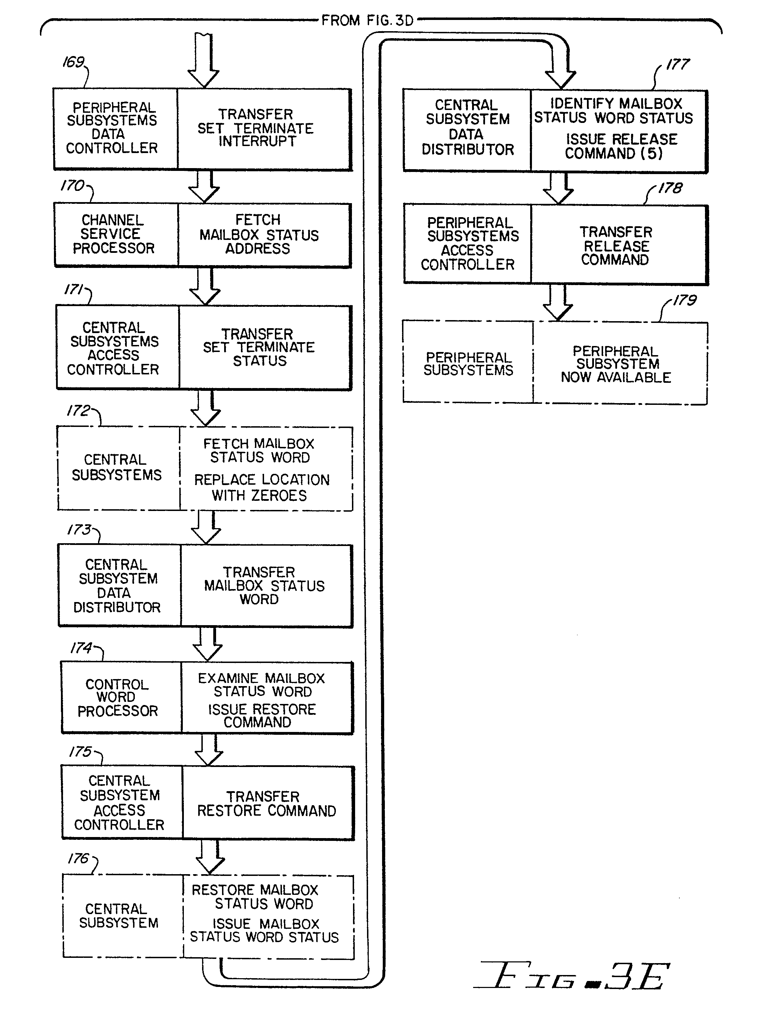

Figure 3 is a detailed example of the implementation of an operation transferring data from a predetermined location in a peripheral subsystem. This implementation is composed of a multiplicity of activities and commands involving the various components of the input/output multiplexer. Those activities performed by the components on the input/output multiplexer are shown in solid boxes, while the activities performed by the peripheral subsystems or the central subsystems are shown in broken-line boxes. In response to the requirement by the central subsystem for signal groups currently in the predetermined peripheral subsystem by the central subsystem, the related central subsystem files are prepared and stored in memory locations. Upon completion of the preparation of the files, the central subsystem issues a signal group, referred to as a connect command 110. For simplicity, reference will only be made hereafter to the command name or to the signal group identification (i.e., mailbox address). It will be understood that those identifications refer to signal groups of pre-established formats.

The connect command is issued (110) by the central subsytem to the central subsystem data distributor. The central subsystem data distributor transfers (111) components of the connect command to components of the input/output multiplexer. A first component of the connect command is stored (112) in the scratch pad memory and a second portion is transferred (113) to the peripheral subsystem access controller. The second component of the connect command is then transferred (114) to the peripheral subsystem where the predetermined peripheral subsystem is reserved (i.e., made unavailable to respond to other connect commands) and a fetch mailbox command is issued. The fetch mailbox command is transferred (115) through the peripheral subsystem data controller to the channel service processor. The mailbox address in the central subsystem, part of the stored component of the connect command, is retrieved (116,117) from the scratch pad memory, and a resulting command is transferred (118) through the central subsystem access controller to the central subsystem where the fetch mailbox command is executed (119).

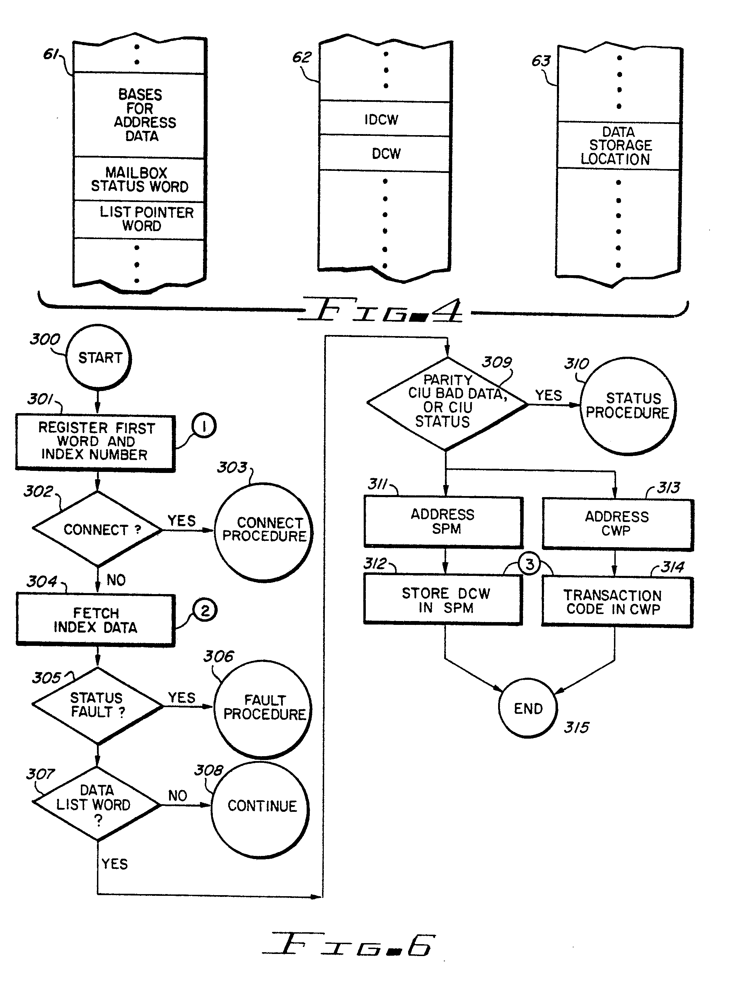

Referring briefly to Figure 4, a summary of the various files constructed by the operating system and contained in the central subsystem is shown. File 61 is referred to as the mailbox and includes, in consecutive memory locations, a plurality of bases for obtaining real address signal groups from the logical address signal groups utilized by the central subsystem, a mailbox status signal group and list pointer word signal group. The list pointer word signal group, after predetermined manipulation, provides the address 62 of the instruction data control word signal group (IDCW) and following in a consecutive memory location the data control word signal group (DCW). The data control word signal group, after appropriate manipulation, provides the address 63 of the data storage location, (i.e., the address into which the first of the peripheral subsystem data words is to be stored).

Returning to Figure 3, the mailbox signal group is transferred (12) via the central subsystem data distributor to the control word processor and the scratch pad memory where the mailbox signals are stored. The control word processor, utilizing the mailbox contents, develops the real address of the instruction data control word and stores this real address in the scratch pad memory. Upon completion of the address development, a release command (1) is issued (121).

The release command is transferred (122) via the peripheral subsystem access controller to the peripheral subsystems. The peripheral subsystem in response to the release command (1) issues (123) a move pointer command. The move pointer command is transferred (124) through the peripheral subsystem data controller to the channel service processor. In the channel service processor, the real IDCW address is retrieved (125,126) from the scratch pad memory and a resulting signal group is transferred (127) through the central subsystem access controller to the central subsystem.

In response to the data signals, the IDCW is retrieved (128) from files in the central subsystem and transferred (129) via the central subsystem data distribution to the control word processor and the scratch pad memory and (130) through the peripheral subsystems access controller to the peripheral subsystems (132). The receipt of the IDCW signal group by the peripheral subsystems is the last signal group necessary for execution of the data retrieval from the predetermined peripheral subsystem. However, the peripheral subsystem does not execute the retrieval immediately. In the control word processor, the IDCW causes the DCW to be developed (131) and stored in the scratch pad memory and a release command (2) delivered (133) through the peripheral subsystem access controller to the subsystem. Upon receipt of the release command (2) indicating the availability of the DCW address, the predetermined peripheral subsystem begins to execute (134) the retrieval of the data signal groups required by the central subsystem, and, concurrent with the execution, a list service command is issued.

The list service command is transferred (135) via the peripheral subsystem data controller to the channel service processor. In the channel service processor, the developed DCW address is retrieved (136,137) from the scratch pad memory, and the list service command is transferred (138) via the central subsystem access controller to the central subsystem. In the central subsystem, the DCW address is retrieved (139) from memory in response to the signal groups.

The DCW address is transferred (14) via the central subsystem data distributor to the control word processor and the scratch pad memory. In the control word processor, the true address of the location in the central subsystem into which the data, retrieved from the predetermined peripheral subsystem is to be stored, is developed (141). After development of the address, the control word processor issues release command (3). The release command is transferred (142) via peripheral subsystem access controller to the peripheral subsystem (143).

When the peripheral subsystems have received the release command and the data is available from the predetermined peripheral subsystem, a data ready signal is issued to the input/output multiplexer. The receipt of the data ready signal causes the accumulated data signal groups to be transferred (144) through the peripheral subsystem data controller to the channel service processor. The channel service processor retrieves (145,146) the data address from the scratch pad memory. The data is transferred (147) through the central subsystem access controller to the central subsystem. In the central subsystem, the data signal groups are stored (148) in the appropriate address. After storage of the signal groups, a stored data status command is transferred (149) via the central subsystem data distributor and transferred (150) through the peripheral subsystem access controller to the peripheral subsystems where the stored data status command (i.e., signal group) is stored (151).

Concurrent with the retrieval (145) of the data address, the channel service processor issues a tally complete signal to the peripheral subsystems. The peripheral subsystems generate (160) a terminate interrupt command. The peripheral subsystems data controller transfers (161) the terminate interrupt command to the channel service processor. The channel service processor retrieves (162,163) status data from the scratch pad memory and the status data becomes part of the terminate interrupt command. The terminate interrupt status command is transferred (164) via control subsystem access controller to the central subsystem.

The central subsystem stores (165) portions of the terminate interrupt status command and issues a storage data command. The central subsystem data distributor identifies (166) the storage data command and issues release command (4). The peripheral subsystem access controller transfers (167) the release control command to the peripheral subsystems. The peripheral subsystems identify (168) the release command and issues a set terminate interrupt command. The set terminate interrupt command is transferred (169) via the peripheral subsystems data controller to the channel service processor. The channel service processor obtains (170) the mailbox status address from the scratch pad memory. The central subsystem access controller transfers (171) the set terminate interrupt to the central subsystem.

The central subsystem retrieves (172) the mailbox status word. The mailbox status word is then transferred (173) via the central subsystem data distributor to the control word processor and the scratch pad memory. The control word processor examines (174) the mailbox status word and issues a restore command which is transferred (175) to the central subsystem via the central subsystem access controller. The central subsystem restores (176) the mailbox status word and issues a mailbox status word status command. The central subsystem data distributor identifies (177) the mailbox status word and issues a release command (5). The release command is transferred (178) via the peripheral subsystem access controller to the peripheral subsystem. The predetermined peripheral subsystem, in response to the release command, is now made available (179) for another operation.

Referring next to Figure 5, the apparatus comprising the central subsystem data distributor 21 is shown along with the coupling to other parts of the input/output multiplexer and to the control interface units of the central subsystems. The input/output multiplexer is shown coupled to two central subsystems (i.e., the associated control interface units), but it could be coupled to one or to more than two central subsystems.

The two control interface units 10a and 10b are coupled to data registers 210 and 211 respectively providing data signal paths. The two data registers are coupled via a data switch 215 to interface control unit 214, data register 217, and connect data register 219. Data register 217 is coupled through a data format switch 218 to the other components of the input/output multiplexer i.e., control word processor 24, scratch pad memory 31, peripheral subsystem access controller 26 and read register, fault interrupt processor 23 and control unit 221. Connect data register 219 is coupled to control unit 221 through steering switch 224 to control word processor 24, scratch pad memory 31, peripheral subsystem access controller 26 and read register and fault interrupt processor 23. Steering switch 224 is also coupled to control unit 221. Each control interface unit is also coupled to a steering register 212 and 213. The steering registers are coupled through steering switch 216 to index apparatus 222 (i.e., index apparatus 22 of Figure 1, but shown in Figure 2 as part of the central subsystem data distributor 21) and steering register 220. Steering switch 216 is coupled to interface control unit 214. Index apparatus 222 is coupled to central subsystem access controller 30 and, through output register 223, to control unit 221 and steering switch 224. The control unit 221 is coupled to other portions of the input/output multiplexer, i.e., the control word processor 24, the peripheral subsystem access controller 26, read register and fault interrupt processor 23 and scratch pad memory 31.

Interface control unit 214 is coupled to the control interface units 10a and 10b and is coupled to steering register 212 and steering register 213.

The central subsystem data distributor 21 comprises two signal group paths, a data signal path and a control signal path. In the system shown, signals from the central subsystem (i.e., the control interface unit) are entered into the associated data register and the associated steering register concurrently. The interface control unit 214 coupled to the steering registers selects, on the basis of the prior activity of the steering register, which of the two steering and data registers should supply signals through switch 216 to steering register 220 and through switch 215 to data register 217 and control register 219.

The signals from steering switch 216 are also applied to index apparatus 22. The control signals from the central subsystem, with the exception of the connect commands, are provided in response to command signals from the input/output multiplexer and relate to activity of a selected peripheral subsystem. Rather than transmit to the central subsystem the address of the peripheral subsystem, the address of the peripheral subsystem is stored in the index apparatus 22 by the central subsystem access controller 30, and an index number for the selected peripheral subsystem address in the index apparatus is transmitted along with the associated signal transmitted by the central subsystem access controller to the central subsystem. In this manner an economy of signals from the input/output multiplexer to the central subsystem and back to the input/output multiplexer is accomplished. However, when the control signals are entered in the input/output multiplexer, the index numbers must be replaced in the peripheral subsystem address. Furthermore, because of the possibility of the continuing entry of signals into the central subsystem data distributor on every timing cycle, it is necessary to replace the index number with the peripheral subsystem address in one timing cycle. Thus, the control signals and the data signals must be transferred together to the appropriate input/output multiplexer component.

Referring to Figure 5, the index register 223, the steering register 220, the connect data register 219 and the data register 217 contain the related signal groups during the same clock cycle. During the next clock cycle, the control and data signals are transferred from the central subsystem data distributor.

The format of the data signal groups result in certain control information being included therein. Thus, control information is selected by register 219 and transferred onto the remainder of the input/output multiplexer. In addition, the format of the data signal groups may not be a format which can be utilized by other components of the input/output multiplexer, so switch 218 serves to reformat the data signal groups. The reformatting is determined by the control unit 221 in response to control information applied to steering register 220.

The control unit 221 is also coupled to the control word processor 24, peripheral subsystems access controller 26 and read register and fault interrupt processor 23. This coupling determines which input/output multiplexer component the signal groups are delivered to.

Figure 6 is a flow diagram of the activity of the central subsystem data distributor for a selected command, the data list word command or transfer DCW, 140 in Figure 3.

Signal groups from a control interface unit are stored (301) into the associated data register and steering register to initiate the transfer procedure, and selected by the data switch 215 and steering switch 216. The command is next tested (302) to determine if it is a connect command. (In a connect command, no index number is associated with it because the specified peripheral subsystem has not yet been identified.) If the command is a connect command, a connect procedure (303) is entered; but if it is not, the signal groups are stored into the data register 217 and the steering register 220, index data is obtained from the index apparatus 222, control data signals and the index data are applied to control unit 221, and the peripheral subsystem address is stored (304) into the output register 223. The control unit tests (305,309) for certain malfunctions, which if present lead to a fault procedure 306 or a status procedure 301. Assuming there is no malfunction, the control unit also tests (307) for a data list word, and follows a branch path 308 if the command is not a store DCW command. Assuming that the command is a store DCW command, the control unit adjusts switch 218 and switch 224 so that appropriate central subsystems data distributor output signals are available. The control unit addresses (311) the scratch pad memory and (313) the control word processor. On the next clock pulse, the DCW word is stored (312) in the scratch pad memory, and the appropriate transaction code is applied to the control word processor to determine (314) its resultant activity. This brings the procedure to an end (315).

– 15 –

CLAIMS

1.  An input/output multiplexer (20) for coupling one or
    more central subsystems (10,12) to a plurality of peripheral subsystems (17-19), including an input unit
    (21) to which control and data signals are fed from the
    central subsystem or subsystems,
    characterized in that the input unit comprises:
    an index unit (222) for replacing an index number portion of the signals from the central subsystem or subsystems by a preselected peripheral subsystem identification number; formatting means (218) for converting
    data signals from the central subsystem or subsystems
    from a central subsystem format to a peripheral subsystem format; and control means (221) responsive to the
    control signals from the central subsystem or subsystems
    to select the format conversion performed by the for-
    matting means.

**FIG. 1**

**FIG. 2**

0088839

# ニエロ-3A

| 110 | CENTRAL SUBSYSTEM | ISSUE CONNECT COMMAND |
|---|---|---|

| 111 | CENTRAL SUBSYSTEM DATA DISTRIBUTOR | DISTRIBUTE CONNECT COMMAND COMPONENTS |
|---|---|---|

| 113 | PERIPHERIAL SUBSYSTEM ACCESS CONTROLLER | TRANSFER CONNECT COMMAND COMPONENT |
|---|---|---|

| 112 | SCRATCH PAD MEMORY | STORE CONNECT COMMAND COMPONENT |
|---|---|---|

| 114 | PERIPHERAL SUBSYSTEMS | RESERVE PERIPHERAL SUBSYSTEM — ISSUE FETCH MAILBOX COMMAND |
|---|---|---|

| 115 | PERIPHERAL SUBSYSTEMS DATA CONTROLLER | TRANSFER FETCH MAILBOX COMMAND |
|---|---|---|

| 116 | CHANNEL SERVICE PROCESSOR | FETCH MAILBOX ADDRESS |
|---|---|---|

| 117 | SCRATCH PAD MEMORY | MAILBOX ADDRESS |
|---|---|---|

| 118 | CENTRAL SUBSYSTEM ACCESS CONTROLLER | TRANSFER FETCH MAILBOX COMMAND |
|---|---|---|

| 119 | CENTRAL SUBSYSTEM | EXECUTE FETCH MAILBOX COMMAND |
|---|---|---|

| 120 | CENTRAL SUBSYSTEM DATA CONTROLLER | TRANSFER MAILBOX CONTENTS |
|---|---|---|

| 121 | CONTROL WORD PROCESSOR AND SPM | STORE MAILBOX CONTENTS; DEVELOP IDCW ADDRESS; ISSUE RELEASE COMMAND (1) |
|---|---|---|

— TO FIG 3B —

FROM FIG. 3A

**Fig. 3B**

| 122 | PERIPHERAL SUBSYSTEMS ACCESS CONTROLLER | TRANSFER RELEASE COMMAND |
|---|---|---|

| 123 | PERIPHERAL SUBSYSTEMS | ISSUE MOVE POINTER COMMAND |
|---|---|---|

| 124 | PERIPHERAL SUBSYSTEMS DATA CONTROLLER | TRANSFER MOVE POINTER COMMAND |
|---|---|---|

| 125 | CHANNEL SERVICE PROCESSOR | FETCH IDCW ADDRESS |
|---|---|---|

| 126 | SCRATCH PAD MEMORY | IDCW ADDRESS |
|---|---|---|

| 127 | CENTRAL SUBSYSTEM ACCESS CONTROLLER | TRANSFER MOVE POINTER COMMAND |
|---|---|---|

| 128 | CENTRAL SUBSYSTEM | EXECUTE FETCH IDCW |
|---|---|---|

| 129 | CENTRAL SUBSYSTEM DATA DISTRIBUTOR | TRANSFER IDCW |
|---|---|---|

| 130 | PERIPHERAL SUBSYSTEMS ACCESS CONTROLLER | TRANSFER IDCW |
|---|---|---|

| 131 | CONTROL WORD PROCESSOR AND SPM | DEVELOP TRUE DCW ADDRESS ISSUE RELEASE COMMAND (2) |
|---|---|---|

| 132 | PERIPHERAL SUBSYSTEMS | PERIPHERAL SUBSYSTEM READY |
|---|---|---|

| 133 | PERIPHERAL SUBSYSTEMS ACCESS CONTROLLER | TRANSFER RELEASE COMMAND |
|---|---|---|

| 134 | PERIPHERAL SUBSYSTEMS | BEGIN PERIPHERAL SUBSYSTEM EXECUTION; ISSUE LIST SERVICE COMMAND |
|---|---|---|

TO FIG. 3C

0088839

FROM FIG. 3B — — — — — — — — — **Fig-3C**

| 135 | PERIPHERAL SUBSYSTEMS DATA CONTROLLER | TRANSFER LIST SERVICE COMMAND |
|---|---|---|

| 136 | CHANNEL SERVICE PROCESSOR | FETCH DCW ADDRESS |
|---|---|---|

| 137 | SCRATCH PAD MEMORY | DCW ADDRESS |
|---|---|---|

| 138 | CENTRAL SUBSYSTEM ACCESS CONTROLLER | TRANSFER LIST SERVICE COMMAND |
|---|---|---|

| 139 | CENTRAL SUBSYSTEM | EXECUTE FETCH DCW |
|---|---|---|

| 140 | CENTRAL SUBSYSTEM DATA DISTRIBUTOR | TRANSFER DCW |
|---|---|---|

| 141 | CONTROL WORD PROCESSOR AND SPM | DEVELOP TRUE DATA ADDRESS; ISSUE RELEASE COMAND (3) |
|---|---|---|

| 142 | PERIPHERAL SUBSYSTEMS ACCESS CONTROLLER | TRANSFER RELEASE COMMAND |
|---|---|---|

| 143 | PERIPHERAL SUBSYSTEMS | ISSUE DATA READY WHEN DATA AND RELEASE COMMANDS ARE AVAILABLE CONCURRENTLY |
|---|---|---|

| 144 | PERIPHERAL SUBSYSTEMS DATA CONTROLLER | TRANSFER DATA |
|---|---|---|

TO FIG. 3D — — — — — — —

FROM FIG. 3C

**FIG - 3D**

| 160 PERIPHERAL SUBSYSTEMS | RECEIVE TALLY COMPLETE / ISSUE TERMINATE STATUS |
|---|---|

| CHANNEL SERVICE PROCESSOR | 145 ISSUE TALLY COMPLETE / FETCH DATA ADDRESS |
|---|---|

| 161 PERIPHERAL SUBSYSTEMS DATA CONTROLLER | TRANSFER TERMINATE STATUS |
|---|---|

| SCRATCH PAD MEMORY | 146 DATA ADDRESS |
|---|---|

| 162 CHANNEL SERVICE PROCESSOR | FETCH STATUS DATA |
|---|---|

| CENTRAL BUBSYSTEM ACCESS CONTROLLER | TRANSFER DATA 147 |
|---|---|

| 163 SCRATCH PAD MEMORY | STATUS DATA |
|---|---|

| 164 CENTRAL SUBSYSTEM ACCESS CONTROLLER | TRANSFER TERMINATE STATUS |
|---|---|

| CENTRAL SUBSYSTEM | STORE DATA / ISSUE STORED DATA STATUS 148 |
|---|---|

| 165 CENTRAL SUBSYSTEM | STORE STATUS DATA / ISSUE STORAGE DATA COMMAND |
|---|---|

| CENTRAL SUBSYSTEM DATA DISTRIBUTOR | TRANSFER STORED DATA STATUS 149 |
|---|---|

| 166 CENTRAL SUBSYSTEM DATA DISTRIBUTOR | IDENTIFY STORAGE STATUS COMMAND / ISSUE RELEASE COMMAND (4) |
|---|---|

| PERIPHERAL SUBSYSTEMS ACCESS CONTROLLER | TRANSFER STORE DATA STATUS 150 |
|---|---|

| 167 PERIPHERAL SUBSYSTEM ACCESS CONTROLLER | TRANSFER RELEASE COMMAND |
|---|---|

| PERIPHERAL SUBSYSTEMS | STORE STORE DATA STATUS 151 |
|---|---|

| 168 PERIPHERAL SUBSYSTEMS | IDENTIFY-RELEASE COMMAND / ISSUE SET TERMINATE INTERRUPT |
|---|---|

TO FIG. 3E

FROM FIG.3D

| 169 | |
|---|---|
| PERIPHERAL SUBSYSTEMS DATA CONTROLLER | TRANSFER SET TERMINATE INTERRUPT |

| 170 | |
|---|---|
| CHANNEL SERVICE PROCESSOR | FETCH MAILBOX STATUS ADDRESS |

| 171 | |
|---|---|
| CENTRAL SUBSYSTEMS ACCESS CONTROLLER | TRANSFER SET TERMINATE STATUS |

| 172 | |
|---|---|
| CENTRAL SUBSYSTEMS | FETCH MAILBOX STATUS WORD REPLACE LOCATION WITH ZEROES |

| 173 | |
|---|---|
| CENTRAL SUBSYSTEM DATA DISTRIBUTOR | TRANSFER MAILBOX STATUS WORD |

| 174 | |
|---|---|
| CONTROL WORD PROCESSOR | EXAMINE MAILBOX STATUS WORD ISSUE RESTORE COMMAND |

| 175 | |
|---|---|
| CENTRAL SUBSYSTEM ACCESS CONTROLLER | TRANSFER RESTORE COMMAND |

| 176 | |
|---|---|
| CENTRAL SUBSYSTEM | RESTORE MAILBOX STATUS WORD ISSUE MAILBOX STATUS WORD STATUS |

| 177 | |
|---|---|
| CENTRAL SUBSYSTEM DATA DISTRIBUTOR | IDENTIFY MAILBOX STATUS WORD STATUS ISSUE RELEASE COMMAND (5) |

| 178 | |
|---|---|
| PERIPHERAL SUBSYSTEMS ACCESS CONTROLLER | TRANSFER RELEASE COMMAND |

| 179 | |
|---|---|
| PERIPHERAL SUBSYSTEMS | PERIPHERAL SUBSYSTEM NOW AVAILABLE |

Fig. 3E

61 — BASES FOR ADDRESS DATA / MAILBOX STATUS WORD / LIST POINTER WORD

62 — IDCW / DCW

63 — DATA STORAGE LOCATION

*FIG. 4*

300 START

301 REGISTER FIRST WORD AND INDEX NUMBER ①

302 CONNECT ? — YES → 303 CONNECT PROCEDURE

NO

304 FETCH INDEX DATA ②

305 STATUS FAULT ? — YES → 306 FAULT PROCEDURE

307 DATA LIST WORD ? — NO → 308 CONTINUE

YES

309 PARITY CIU BAD DATA, OR CIU STATUS — YES → 310 STATUS PROCEDURE

311 ADDRESS SPM

313 ADDRESS CWP

312 STORE DCW IN SPM ③

314 TRANSACTION CODE IN CWP

END 315

*FIG. 6*

Fig.5

8/8

0088839

European Patent
Office

**EUROPEAN SEARCH REPORT**

**0088839**
Application number

EP 82 30 1276

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 06 F 3/04 |
| Y | IEEE TRANSACTIONS ON INDUSTRIAL ELECTRONICS AND CONTROL INSTRUMENTATION, vol. IECI-28, no. 2, May 1981, pages 82-90, New York (USA); J.R.GLOVER, Jr.: "A design for the remote link unit- A multiprocessor remote terminal". *Page 83, first column, lines 5-8,29-32; figure 1; figures 2,3 on page 84; page 85, table I, second column, lines 14-43; page 86, table III, first column, second column, lines 5-7; page 87, first column, lines 30-33, second column, lines 30-33; figure 5; page 88, first column, lines 1-4; figure 6* | 1 | |
| Y | FR-A-2 371 011 (HONEYWELL) *Page 2, lines 21-26,37-38; page 3, lines 1-2; page 4, lines 13-16; page 5, lines 1-6,23-28; page 6, lines 1-3; page 10, lines 4-13; page 16, lines 23-37; figures 2,3* | 1 | **TECHNICAL FIELDS SEARCHED (Int. Cl. ³)**<br><br>G 06 F 3/04 |
| | --- -/- | | |

The present search report has been drawn up for all claims

| Place of search THE HAGUE | Date of completion of the search 12-11-1982 | Examiner DHEERE R.F.B.M. |
|---|---|---|

European Patent
Office

EUROPEAN SEARCH REPORT

0088839

Application number

EP 82 30 1276

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y | IBM TECHNICAL DISCLOSURE BULLETIN, vol. 18, no. 8, January 1976, pages 2415-2417, New York (USA); G.H.EDSTROM et al.: "Interconnector for diverse types of programmed apparatus". *The figures on page 2415; page 2416, lines 2,20-21; page 2417, lines 11-17* | 1 | |
| Y | EP-A-0 029 177 (TEXAS INSTRUMENTS) *Page 2, lines 4-10; page 3, lines 14-20; page 10, lines 23-26; page 11, lines 20-31; page 12, lines 1-5; page 83, lines 19-27; page 103, lines 16-21; figures 1a,1b* | 1 | |
| | | | TECHNICAL FIELDS SEARCHED (Int. Cl. ³) |

The present search report has been drawn up for all claims

| Place of search THE HAGUE | Date of completion of the search 12-11-1982 | Examiner DHEERE R.F.B.M. |
|---|---|---|